(19) Europäisches Patentamt / European Patent Office / Office européen des brevets

(11) **EP 3 957 683 B1**

(12) **EUROPEAN PATENT SPECIFICATION**

(45) Date of publication and mention of the grant of the patent:
**08.10.2025 Bulletin 2025/41**

(21) Application number: **20790554.8**

(22) Date of filing: **25.03.2020**

(51) International Patent Classification (IPC):
***C08K 3/105*** *(2018.01)* ***C08K 3/10*** *(2018.01)*
***C08K 3/24*** *(2006.01)* ***C08K 3/30*** *(2006.01)*
***C08K 3/22*** *(2006.01)* ***C08L 69/00*** *(2006.01)*
***C08K 5/521*** *(2006.01)*

(52) Cooperative Patent Classification (CPC):
(C-Sets available)
**C08K 3/105; C08K 3/22; C08K 3/30; C08K 5/521; C09K 11/02; C09K 11/7789; C09K 11/7792; C09K 11/77922;** C08K 3/013; C08K 2003/3009; C08K 2201/014 (Cont.)

(86) International application number:
**PCT/JP2020/013397**

(87) International publication number:
**WO 2020/213356 (22.10.2020 Gazette 2020/43)**

(54) **LUMINOUS POLYCARBONATE RESIN COMPOSITION AND MOLDED ARTICLE THEREOF**

LEUCHTENDE POLYCARBONAT-HARZ-ZUSAMMENSETZUNG UND DARAUS GEFORMTES OBJEKT

COMPOSITION DE RÉSINE DE POLYCARBONATE LUMINEUSE ET ARTICLE MOULÉ DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2019 JP 2019078683**
**17.04.2019 JP 2019078684**
**03.02.2020 JP 2020016382**
**18.03.2020 JP 2020047980**

(43) Date of publication of application:
**23.02.2022 Bulletin 2022/08**


(73) Proprietor: **Mitsubishi Engineering-Plastics Corporation**
**Tokyo 105-0021 (JP)**

(72) Inventor: **NISHIBAYASHI, Yutaka**
**Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**



(56) References cited:
**JP-A- 2008 127 485** **JP-A- 2010 159 318**
**JP-A- 2016 028 111** **JP-A- 2016 198 902**
**JP-A- 2017 025 137** **JP-A- 2017 135 134**
**JP-A- 2018 154 741** **RU-C2- 2 609 801**

- **DATABASE WPI Week 201617, Derwent World Patents Index; AN 2016-12265B, XP002806406**
- **MURAZAKI Y ET AL: "A new long persistence red phosphor", IDW, PHP-6, LONDON UK, January 1999 (1999-01-01), pages 841 - 844, XP007014289**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 957 683 B1

(52) Cooperative Patent Classification (CPC): (Cont.)

C-Sets
**C08K 3/105, C08L 69/00;**
**C08K 3/22, C08L 69/00;**
**C08K 3/30, C08L 69/00;**
**C08K 5/521, C08L 69/00**

## Description

### Technical Field

The present invention relates to a phosphorescent polycarbonate resin composition and to a molded article of the phosphorescent polycarbonate resin composition. The present invention specifically relates to a phosphorescent polycarbonate resin composition containing at least a red light-emitting phosphorescent material as a phosphorescent material and having a high L* value and good luminance and to a molded article formed by molding the phosphorescent polycarbonate resin composition.

### Background Art

Polycarbonate resin compositions in which a phosphorescent material is blended have been variously proposed as a molding material for phosphorescent light-emitting members such as road signs and signboards and studies on improvements of such polycarbonate resin compositions have been conducted. A phosphorescent material is, when irradiated with light such as ultraviolet light or visible light contained in sunlight, artificial light, or the like, absorbs and stores the light and, even after light irradiation is stopped, that is, even in the dark, continues to emit light in the form of radiation for a predetermined time period.

Phosphorescent pigments for kneading into a resin that have been provided in the related art are mainly those emitting light in green, blue-green, blue, or purple, and red phosphorescent pigments capable of being blended with polycarbonate resins have not been provided. As a phosphorescent pigment emitting light in red, a sulfide phosphorescent pigment (CaS:Eu,Tm) is known, but such a phosphorescent pigment has problems of: causing yellowing or darkening when kneaded into a resin, failing to achieve clear red light emission; and causing hydrolysis of a polycarbonate resin.

Furthermore, the use of two or more kinds of phosphorescent pigments emitting light in different colors in mixture has not been performed in the related art, and in actuality, only phosphorescent polycarbonate resin compositions emitting light in the original light-emitting color of a phosphorescent pigment used have been provided.

PTL 1 proposes that alkyl acid phosphate and/or an alkyl acid phosphate metal salt which is a stabilizer and a fatty acid ester compound which is a mold release agent are used in combination and blended in predetermined proportions to improve the problem of darkening occurring during the melt-kneading or molding of a polycarbonate resin composition in which a phosphorescent material is blended with a polycarbonate resin.

PTL 1 discloses that two or more kinds of a phosphorescent material may be used, but does not illustrate any red light-emitting phosphorescent material, nor does it study the blending of a red light-emitting phosphorescent material. Furthermore, PTL 1 discloses no Examples in which two or more kinds of a phosphorescent material are actually mixed and blended.

PTL 1: JP2016-28111A

### Summary of Invention

The present invention has an object to provide a novel red light-emitting phosphorescent polycarbonate resin composition in which a red light-emitting phosphorescent material is blended and a molded article formed by molding the phosphorescent polycarbonate resin composition.

Furthermore, the present invention has an object to provide a phosphorescent polycarbonate resin composition, emitting, during light blockage, light in a color tone that existing phosphorescent polycarbonate resin compositions were unable to realize, such as white, and a molded article formed by molding the phosphorescent polycarbonate resin composition.

The present inventor has found that even when a red light-emitting phosphorescent material is blended with a polycarbonate resin, by combining a particular stabilizer therewith and selecting a red light-emitting phosphorescent material, a red phosphorescent polycarbonate resin composition emitting light in clear red without causing, for example, yellowing or darkening or a deterioration in the molecular weight of the polycarbonate resin during high-temperature retention molding can be provided.

The present inventor has also found that, by blending two or more kinds of a phosphorescent material emitting light in different colors, a phosphorescent polycarbonate resin composition emitting, during light blockage, light in a color tone that existing phosphorescent polycarbonate resin compositions were unable to realize, such as white, can be provided.

The present invention is summarized as follows.

[1] A phosphorescent polycarbonate resin composition comprising: 100 parts by mass of a polycarbonate resin (A);

and 3 to 20 parts by mass of a phosphorescent material (B), wherein the phosphorescent material (B) includes a red light-emitting phosphorescent material (B1), and further contains a blue light-emitting phosphorescent material (B2) or a green light-emitting phosphorescent material (B3),

wherein an L* value measured in accordance with a following method (X) is 65 or more,

the method (X) including: under conditions of a cylinder temperature of 300°C, a mold temperature of 120°C, and a molding cycle of 45 seconds, measuring, with a colordifference meter, the L* of a 3 mm-thick portion of a specimen (in a form of a three-stage plate having a width of 50 mm, a length of 90 mm, and thicknesses of 1 mm, 2 mm, and 3 mm) obtained by injection molding of the phosphorescent polycarbonate resin composition, under following conditions based on JIS Z8722:

Reflection measurement: D65 light source, 10-degree field of view
Measurement port: 30 $\phi$
Specimen material holder: White

[2] The phosphorescent polycarbonate resin composition according to [1], wherein the phosphorescent material (B) contains the red light-emitting phosphorescent material (B1), the blue light-emitting phosphorescent material (B2), and the green light-emitting phosphorescent material (B3).

[3] The phosphorescent polycarbonate resin composition according to [1] or [2], wherein, in the phosphorescent material (B), a content of the red light-emitting phosphorescent material (B1) is 45% by mass or more with respect to an entire amount of the phosphorescent material (B) .

[4] The phosphorescent polycarbonate resin composition according to [3], wherein, in the phosphorescent material (B), a content of the red light-emitting phosphorescent material (B1) is 45% by mass or more and 90% by mass or less with respect to an entire amount of the phosphorescent material (B).

[5] The phosphorescent polycarbonate resin composition according to any one of [1] to [4] , wherein the red light-emitting phosphorescent material (B1) is europium-magnesium-titanium-activated yttrium oxysulfide ($Y_2O_2S$:Eu,Mg,Ti).

[6] The phosphorescent polycarbonate resin composition according to any one of [1] [5] , wherein the blue light-emitting phosphorescent material (B2) is dysprosium-europium-activated strontium magnesium silicate ($Sr_2MgSi_2O_7$:Eu,Dy).

[7] The phosphorescent polycarbonate resin composition according to any one of [1] [6] , wherein the green light-emitting phosphorescent material (B3) is dysprosium-europium-activated strontium aluminate ($SrO\text{-}aAl_2O_3$:Eu,Dy, $0.8 < a < 3$).

[8] The phosphorescent polycarbonate resin composition according to any one of [1] to [7] , further comprising, with respect to 100 parts by mass of the polycarbonate resin (A): 0.01 to 1 part by mass of one kind or two or more kinds of a phosphate stabilizer (C) selected from alkyl acid phosphate, alkenyl acid phosphate, and metal salts of the foregoing.

[9] The phosphorescent polycarbonate resin composition according to [8], wherein the phosphate stabilizer (C) is represented by a following formula (I):

$$O{=}P(OH)_n(OR)_{3-n} \cdots \qquad (I)$$

wherein R is an alkyl group or an alkenyl group having a carbon number of 9 to 30, n is an integer of 1 or 2, and when n is 1, two Rs may be the same or different.

[10] The phosphorescent polycarbonate resin composition according to [9], wherein the R in the formula (I) is an alkyl group or an alkenyl group having a carbon number of 13, 18, or 24.

[11] The phosphorescent polycarbonate resin composition according to [10], wherein the phosphate stabilizer (C) is represented by a following formula (II) and is a mixture of distearyl acid phosphate corresponding to the formula (II) wherein n = 1 and monostearyl acid phosphate corresponding to the formula (II) wherein n = 2:

$$O{=}P\ (OH)_n(OC_{18}H_{37})_{3-n} \cdots \qquad (II)$$

[12] A molded article formed by molding the phosphorescent polycarbonate resin composition according to any one of [1] to [11].

[13] The molded article according to [12], wherein the phosphorescent material (B) contains the red light-emitting phosphorescent material (B1), the blue light-emitting phosphorescent material (B2), and the green light-emitting phosphorescent material (B3), and an afterglow color obtained, after light blockage following light irradiation performed on the molded article, is white.

Advantageous Effects of Invention

According to the present invention, a novel red phosphorescent polycarbonate resin composition emitting light in red during light shielding and a molded article of the phosphorescent polycarbonate resin composition can be provided.
Furthermore, according to the present invention, a phosphorescent polycarbonate resin composition emitting, during light blockage, light in a color tone that existing phosphorescent polycarbonate resin compositions were unable to realize, such as white, and a molded article of the phosphorescent polycarbonate resin composition can be provided.
A molded article of the present invention formed by molding the phosphorescent polycarbonate resin composition of the present invention exhibits phosphorescent light emission in red or a different color and can be used for a wide variety of applications ranging from electronic signboards, commodity displays, liquid crystal backlights, lighting displays, lighting equipment covers, traffic signs, safety signs, night-visibility-enhancing members, signboards, screens, automobile components such as reflectors and meter components, play equipment in amusement facilities and toys, and mobile devices such as laptop computers and mobile phones to display buttons in automobile cabins and in buildings, dials of watches, accessories, stationery, sporting goods, and housings, switches, and buttons in fields such as of various electrical, electronic, and OA equipment.

Description of Embodiments

Hereinafter, the present invention will be described in detail referring to embodiments, illustrations, and the like.

[Phosphorescent Polycarbonate Resin Composition]

A phosphorescent polycarbonate resin composition of the present invention (which may be hereinafter referred to as a "resin composition of the present invention") contains, with respect to 100 parts by mass of a polycarbonate resin (A), 0.8 to 20 parts by mass of a red light-emitting phosphorescent material (B1) as a phosphorescent material (B), where an L* value measured in accordance with the following method (X) is 65 or more.
the method (X) including: under conditions of a cylinder temperature of 300°C, a mold temperature of 120°C, and a molding cycle of 45 seconds, measuring, with a colordifference meter, the L* of a 3 mm-thick portion of a specimen (in a form of a three-stage plate having a width of 50 mm, a length of 90 mm, and thicknesses of 1 mm, 2 mm, and 3 mm) obtained by injection molding of the phosphorescent polycarbonate resin composition, under following conditions based on JIS Z8722:

Reflection measurement: D65 light source, 10-degree field of view
Measurement port: 30 $\phi$
Specimen material holder: White

[Polycarbonate Resin (A)]

As a polycarbonate resin (A) used in the present invention, an aromatic polycarbonate resin is preferable in view of, for example, transparency, impact resistance, and heat resistance.
An aromatic polycarbonate resin is an optionally branched thermoplastic polymer or copolymer that is obtained by reacting an aromatic dihydroxy compound with phosgene or a carbonic acid diester or by reacting an aromatic dihydroxy compound and a small amount of a polyhydroxy compound with phosgene or a carbonic acid diester. The production method for the aromatic polycarbonate resin is not particularly limited, and it is possible to use an aromatic polycarbonate resin produced in accordance with an existing publicly known phosgene method (interfacial polymerization method) or melting method (transesterification method). When the melting method is used, it is possible to use an aromatic polycarbonate resin in which the amount of OH groups of terminal groups is adjusted.
Examples of the aromatic dihydroxy compound which is a raw material include 2,2-bis(4-hydroxyphenyl)propane (i.e., bisphenol A), tetramethyl bisphenol A, bis(4-hydroxyphenyl)-p-diisopropylbenzene, hydroquinone, resorcinol, and 4,4-dihydroxydiphenyl, and a preferable example is bisphenol A. Furthermore, it is possible to use a compound in which at least one tetraalkylphosphonium sulfonate is bonded to the foregoing aromatic dihydroxy compound.
To obtain a branched aromatic polycarbonate resin, a portion of the above-described aromatic dihydroxy compound may be substituted with a branching agent such as those described as follows, that is: polyhydroxy compounds such as phloroglucinol, 4,6-dimethyl-2,4,6-tri(4-hydroxyphenyl)heptene-2,4,6-dimethyl-2,4,6-tri(4-hydroxyphenyl) heptane, 2,6-dimethyl-2,4,6-tri(4-hydroxyphenyl)heptene-3,1,3,5-tri(4-hydroxyphenyl)benzene, and 1,1,1-tri(4-hydroxyphenyl)ethane; and compounds such as 3,3-bis(4-hydroxyaryl)oxyindole (i.e., isatin bisphenol), 5-chloroisatin, 5,7-dichloroisatin, and 5-bromoisatin. The amount of such a compound to be used for substitution is normally 0.01 to 10 mol% and preferably 0.1 to 2 mol% with respect to the aromatic dihydroxy compound.
Among the above, as the aromatic polycarbonate resin, a polycarbonate resin derived from 2,2-bis(4-hydroxyphenyl)propane or a polycarbonate copolymer derived from 2,2-bis(4-hydroxyphenyl)propane and other aromatic dihydroxy compounds is preferable. The aromatic polycarbonate resin may be a copolymer mainly formed of a polycarbonate resin, such as a copolymer with a polymer or an oligomer having a siloxane structure.

The aromatic polycarbonate resin may be used in one kind alone or in a mixture of two or more kinds.

To adjust the molecular weight of the aromatic polycarbonate resin, a monovalent aromatic hydroxy compound is used. Examples of the monovalent aromatic hydroxy compound include m- and p-methylphenol, m- and p-propylphenol, p-tert-butylphenol, and p-long-chain alkylsubstituted phenol.

The aromatic polycarbonate resin used in the present invention has any molecular weight according to the application and the molecular weight is appropriately selected and determined. The molecular weight of the aromatic polycarbonate resin used in the present invention is preferably 20,000 to 50,000 by viscosity-average molecular weight (Mv). When the viscosity-average molecular weight is 20,000 or more, the molded article to be obtained has good mechanical strength such as impact resistance. When the viscosity-average molecular weight is 50,000 or less, good fluidity and excellent moldability are achieved. The viscosity-average molecular weight of the aromatic polycarbonate resin is more preferably 20,000 to 40,000, and even more preferably 21,000 to 30,000.

Two or more kinds of such aromatic polycarbonate resins having different viscosity-average molecular weights may be used in mixture. In this case, aromatic polycarbonate resins having viscosity-average molecular weights outside the above-described suitable range may be mixed.

The viscosity-average molecular weight (Mv) refers to a value calculated by the Schnell viscosity formula, that is, $\eta = 1.23 \times 10^{-4}\ MV^{0.83}$, from the limiting viscosity ($\eta$) (unit: dl/g) at a temperature of 20°C determined with an Ubbelohde viscometer using methylene chloride as a solvent. The limiting viscosity ($\eta$) is a value calculated by the following formula from the measurement of the specific viscosity ($\eta_{sp}$) at each solution concentration (C) (g/dl).

[Math. 1]

$$\eta = \lim_{c \to 0} \eta_{sp} / \mathrm{C}$$

[Phosphorescent Material (B)]

When irradiated with light such as ultraviolet light or visible light contained in sunlight, artificial light, or the like, a phosphorescent material absorbs and stores the light and, even after light irradiation is stopped, that is, even in the dark, continues to emit light in the form of radiation for a predetermined time period. The phosphorescent material has, after photoexcitation is finished, an afterglow durability of about several minutes to several ten hours and is distinguished from, for example, a common fluorescent brightener whose light emission is quickly attenuated after light irradiation is stopped.

In the present invention, at least a red light-emitting phosphorescent material (B1) is used as a phosphorescent material (B). The red light-emitting phosphorescent material (B1) used in the present invention has the above-described phosphorescent properties and emits light in red during light blockage. Such a red light-emitting phosphorescent material (B1) is not particularly limited, but examples thereof include europium-magnesium-titanium-activated yttrium oxysulfide ($Y_2O_2S$:Eu,Mg,Ti).

The red light-emitting phosphorescent material (B1) may be used in one kind alone or in a combination of two or more kinds having different chemical compositions and particle diameters.

As the phosphorescent material (B), it is acceptable to use only the red light-emitting phosphorescent material (B1) or to use a phosphorescent material (B) emitting light in a different color, for example, a blue light-emitting phosphorescent material (B2), and/or a green light-emitting phosphorescent material (B3) in combination with the red light-emitting phosphorescent material (B1). Thus, by blending two or more kinds of the phosphorescent material (B) having different light-emitting colors, for example, the blue light-emitting phosphorescent material (B2) and/or the green light-emitting phosphorescent material (B3) in combination with the red light-emitting phosphorescent material (B1), with the polycarbonate resin (A), a phosphorescent polycarbonate resin composition emitting, during light blockage, light in various color tones that did not exist in the related art and that are suited to various applications can be obtained.

For example, by using the red light-emitting phosphorescent material (B1) and the blue light-emitting phosphorescent material (B2) in mixture, a phosphorescent polycarbonate resin composition emitting light in red-purple during light blockage can be realized. Furthermore, by using the red light-emitting phosphorescent material (B1) and the green light-emitting phosphorescent material (B3) in mixture, a phosphorescent polycarbonate resin composition emitting light in blue-green during light blockage can be realized. Moreover, by adjusting the mixing proportions of the foregoing, the light and shade and brightness of the light-emitting color can be adjusted.

Particularly, by blending three kinds of the phosphorescent material (B) which are the red light-emitting

phosphorescent material (B1), the blue light-emitting phosphorescent material (B2), and the green light-emitting phosphorescent material (B3) corresponding to three primary colors of light in combination with the polycarbonate resin (A), a phosphorescent polycarbonate resin composition emitting light in white during light blockage can be realized, and moreover, by adjusting the mixing proportions of the foregoing, the light and shade and brightness of the light-emitting color can be adjusted.

The blue light-emitting phosphorescent material (B2) and the green light-emitting phosphorescent material (B3) can be used in mixture, and in this case, a phosphorescent polycarbonate resin composition emitting light in greenish blue during light blockage can be realized, but when the blue light-emitting phosphorescent material (B2) and the green light-emitting phosphorescent material (B3) are used in combination, the L* value of the initial hue tends to be slightly deteriorated.

The blue light-emitting phosphorescent material (B2) and the green light-emitting phosphorescent material (B3) used in combination with the red light-emitting phosphorescent material (B1) are not particularly limited. As the blue light-emitting phosphorescent material (B2), dysprosium-europium-activated strontium magnesium silicate ($Sr_2MgSi_2O_7$:Eu,Dy) is preferably used. As the green light-emitting phosphorescent material (B3), dysprosium-europium-activated strontium aluminate ($SrO \cdot aAl_2O_3$:Eu,Dy, $0.8 < a < 3$) is preferably used. The blue light-emitting phosphorescent material (B2) may be used in one kind alone or in a combination of two or more kinds having different chemical compositions and particle diameters. The green light-emitting phosphorescent material (B3) may be used in one kind alone or in a combination of two or more kinds having different chemical compositions and particle diameters.

The average particle diameter $D_{50}$ of the phosphorescent material (B) is preferably 1 $\mu$m or more and less than 100 $\mu$m, more preferably 5 to 70 $\mu$m, and even more preferably 10 to 50 $\mu$m. When the particle diameter of the phosphorescent material (B) is at the foregoing upper limit or less, a deterioration in, for example, the tensile elongation at break, impact strength, and appearance of the molded article to be obtained can be prevented or reduced. When the average particle diameter $D_{50}$ of the phosphorescent material (B) is at the foregoing lower limit or more, excellent light-emitting properties are achieved.

The average particle diameter $D_{50}$ in the present invention refers to the median diameter $D_{50}$ measured with a laser diffraction particle size distribution analyzer and is measured with, for example, a "laser diffraction particle size distribution analyzer SALD-2100" manufactured by Shimadzu Corporation. The catalogue value can be adopted in the case of commercially available products.

The amount of the phosphorescent material (B) blended is, with respect to 100 parts by mass of the polycarbonate resin (A), in terms of the lower limit, 3 parts by mass or more, preferably 5 parts by mass or more, and particularly preferably 8 parts by mass or more, and in terms of the upper limit, 20 parts by mass or less, preferably 18 parts by mass or less, more preferably 15 parts by mass or less, and even more preferably 13 parts by mass or less. When the amount of the phosphorescent material (B) blended is smaller than the foregoing lower limit, the phosphorescent effects attributed to the blending of the phosphorescent material (B) cannot be sufficiently obtained. Although the larger the amount of the phosphorescent material (B) blended, the more preferable it is in view of phosphorescent effects, an excessively large amount of the phosphorescent material (B) blended impairs, for example, moldability and heat stability and the mechanical strength of the molded article.

Here, when one kind of the phosphorescent material (B) is used, the amount of the phosphorescent material (B) blended corresponds to the amount of the one kind of the phosphorescent material (B) blended, and when two or more kinds of the phosphorescent material (B) are used, the amount of the phosphorescent material (B) blended corresponds to a total amount of each kind of the phosphorescent material (B) blended.

In the present invention, as the phosphorescent material (B), at least the red light-emitting phosphorescent material (B1) is used, and the blue light-emitting phosphorescent material (B2) and/or the green light-emitting phosphorescent material (B3) may be used in combination with the red light-emitting phosphorescent material (B1).

When the blue light-emitting phosphorescent material (B2) and/or the green light-emitting phosphorescent material (B3) is used in combination with the red light-emitting phosphorescent material (B1), the proportion of the red light-emitting phosphorescent material (B1) in an entire amount of the phosphorescent material (B) is preferably 45% by mass or more, more preferably 50% by mass or more, and particularly preferably 55% by mass or more. When the proportion of the red light-emitting phosphorescent material (B1) is at the foregoing lower limit or more, light emission in color tones suited to various applications that is attributed to the use of the red light-emitting phosphorescent material (B1) can be obtained. On the other hand, in view of ensuring that the effects attributed to the use of two or more kinds of the phosphorescent material (B) in combination are obtained while securing the amount of the phosphorescent material (B) other than the red light-emitting phosphorescent material (B1), the proportion of the red light-emitting phosphorescent material (B1) in an entire amount of the phosphorescent material (B) is preferably 90% by mass or less, more preferably 85% by mass or less, and preferably 80% by mass or less.

When the red light-emitting phosphorescent material (B1), the blue light-emitting phosphorescent material (B2), and the green light-emitting phosphorescent material (B3) are used in mixture, to achieve white light emission excelling in aesthetic appearance, with respect to an entire amount of the phosphorescent material (B), 50 to 70% by mass of the red

light-emitting phosphorescent material (B1), 15 to 45% by mass of the blue light-emitting phosphorescent material (B2), and 5 to 15% by mass of the green light-emitting phosphorescent material (B3) are preferably used, and 55 to 65% by mass of the red light-emitting phosphorescent material (B1), 22.5 to 37.5% by mass of the blue light-emitting phosphorescent material (B2), and 7.5 to 12.5% by mass of the green light-emitting phosphorescent material (B3) are more preferably used.

[Phosphate Stabilizer (C)]

The resin composition of the present invention may further contain one kind or two or more kinds of a phosphate stabilizer (C) selected from alkyl acid phosphate, alkenyl acid phosphate, and metal salts of the foregoing. Containing the phosphate stabilizer (C) is preferable in view of preventing or reducing yellowing or darkening attributed to the blending of the phosphorescent material (B) and preventing or reducing the decomposition of the polycarbonate resin (A) to thereby prevent or reduce a deterioration in the molecular weight of the polycarbonate resin (A) during high-temperature retention molding.

The alkyl acid phosphate or the alkenyl acid phosphate which is the phosphate stabilizer (C) is preferably represented by the following formula (I).

The alkyl acid phosphate or the alkenyl acid phosphate is preferably represented by the following formula (I) and an alkyl acid phosphate metal salt or an alkenyl acid phosphate metal salt is preferably a metal salt, such as a zinc salt or an aluminum salt, of the alkyl acid phosphate or the alkenyl acid phosphate represented by the following formula (I):

$$O{=}P(OH)_n(OR)_{3-n} \cdots \qquad (I)$$

wherein R is an alkyl group or an alkenyl group having a carbon number of 9 to 30, n is an integer of 1 or 2, and when n is 1, two Rs may be the same or different.

The alkyl group represented by R in the formula (I) may be a linear alkyl group or a branched alkyl group. Specific examples of the alkyl group represented by R include nonyl, isononyl, decyl, isodecyl, dodecyl, tridecyl, isotridecyl, tetradecyl, hexadecyl, octadecyl (stearyl), eicosyl, and tetracosyl groups. The alkenyl group represented by R may be a linear alkenyl group or a branched alkenyl group. Specific examples of the alkenyl group represented by R include an oleyl group. Furthermore, n is 1 or 2 and may be a mixture thereof.

The alkyl group or the alkenyl group represented by R in the formula (I) preferably has a carbon number of 13, 18, or 24. The alkyl acid phosphate is particularly preferably represented by the following formula (II) and is a mixture of distearyl acid phosphate corresponding to the formula (II) wherein n = 1 and monostearyl acid phosphate corresponding to the formula (II) wherein n = 2:

$$O{=}P(OH)_n(OC_{18}H_{37})_{3-n} \cdots \qquad (II)$$

The metal salt of the alkyl acid phosphate is preferably a mixture of a distearyl acid phosphate zinc salt represented by the following formula (IIIa) and a monostearyl acid phosphate zinc salt represented by the following formula (IIIb).

[Chem. 1]

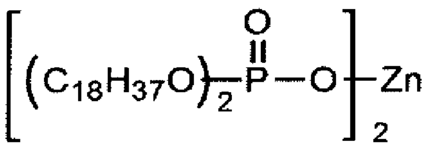

···(IIIa)

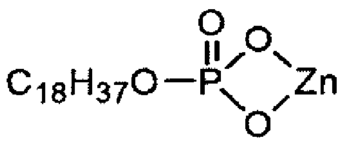

···(IIIb)

The phosphate stabilizer (C) may be used in one kind alone or in a mixture of two or more kinds.

The amount of the phosphate stabilizer (C) blended is, with respect to 100 parts by mass of the polycarbonate resin, 0.01 to 1 part by mass, more preferably 0.02 to 0.5 parts by mass, and even more preferably 0.03 to 0.1 parts by mass. When the amount of the phosphate stabilizer (C) blended is at the foregoing lower limit or more, the effects attributed to the blending of the phosphate stabilizer (C) on the prevention or reduction of the decomposition of the polycarbonate resin (A) can be sufficiently obtained. When the amount of the phosphate stabilizer (C) blended is at the foregoing upper

limit or less, a deterioration in impact resistance can be prevented or reduced and the impairment of the appearance of the molded article can be prevented.

[Mold Release Agent (D)]

The resin composition of the present invention may contain a mold release agent (D) to enhance mold release properties and the surface smoothness of the molded article.

A preferable mold release agent (D) is a compound selected from aliphatic carboxylic acids, aliphatic carboxylic acid esters, and aliphatic hydrocarbon compounds having a number-average molecular weight of 200 to 15,000. Among them, a compound selected from aliphatic carboxylic acids and aliphatic carboxylic acid esters is preferably used.

Examples of the aliphatic carboxylic acids include saturated or unsaturated aliphatic monocarboxylic acids, dicarboxylic acids, and tricarboxylic acids. In the present specification, the term "aliphatic carboxylic acids" is used to also encompass alicyclic carboxylic acids. Among the aliphatic carboxylic acids, mono- or dicarboxylic acids having a carbon number of 6 to 36 are preferable, and aliphatic saturated monocarboxylic acids having a carbon number of 6 to 36 are more preferable.

Specific examples of such aliphatic carboxylic acids include palmitic acid, stearic acid, valeric acid, caproic acid, capric acid, lauric acid, arachidic acid, behenic acid, lignoceric acid, cerotic acid, melissic acid, tetratriacontanoic acid, montanic acid, glutaric acid, adipic acid, and azelaic acid.

The same aliphatic carboxylic acids as described above can be used as an aliphatic carboxylic acid component forming the aliphatic carboxylic acid esters. Examples of an alcohol component forming the aliphatic carboxylic acid esters include saturated or unsaturated monohydric alcohols and saturated or unsaturated polyhydric alcohols. These alcohols may have a substituent such as a fluorine atom or an aryl group. Among these alcohols, monohydric or polyhydric saturated alcohols having a carbon number of 30 or less are preferable, and aliphatic saturated monohydric alcohols or polyhydric alcohols having a carbon number of 30 or less are more preferable. Here, aliphatic alcohols encompass alicyclic alcohols.

Specific examples of the alcohols include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The aliphatic carboxylic acid esters may contain aliphatic carboxylic acids and/or alcohols as impurities and may be a mixture of a plurality of compounds.

Specific examples of the aliphatic carboxylic acid esters include beeswax (a mixture containing myricyl palmitate as a main component), stearyl stearate, behenyl behenate, octyldodecyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.

The mold release agent (D) may be used in one kind alone or in a combination of two or more kinds.

When the resin composition of the present invention contains the mold release agent (D), the content is preferably 0.01 to 1 part by mass with respect to 100 parts by mass of the polycarbonate resin (A). When the content of the mold release agent (D) is in the foregoing range, the deterioration in hydrolysis resistance is absent, and thus mold release effects can be obtained.

[Ultraviolet Light Absorber (E)]

The resin composition of the present invention may contain an ultraviolet light absorber (E).

When exposed to light such as sunlight or fluorescent light for a long time, a resin molded article tends to be yellowed by ultraviolet light, but by adding the ultraviolet light absorber (E), such yellowing can be prevented or delayed.

As the ultraviolet light absorber (E), a malonic acid ester ultraviolet light absorber and an oxalic acid anilide ultraviolet light absorber are, particularly a malonic acid ester ultraviolet light absorber is, preferably used.

<Malonic Acid Ester Ultraviolet Light Absorber>

As the malonic acid ester ultraviolet light absorber, any existing publicly known malonic acid ester compounds can be used. Among the foregoing, 2-(alkylidene)malonic acid esters, particularly 2-(1-arylalkylidene)malonic acid esters are preferable in view of the initial hue of the resin composition.

As the 2-(1-arylalkylidene)malonic acid esters, particularly those represented by the following formula (A) are preferable.

[Chem. 2]

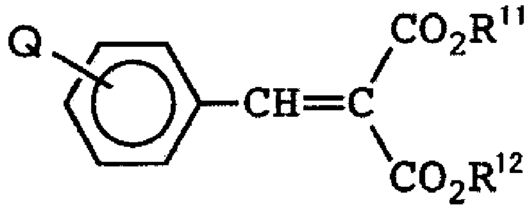

(A)

In the formula (A), Q represents a hydrogen atom, an alkyl group or an alkoxy group having a carbon number of 1 to 8 that optionally has a substituent, or an alkenyl group having a carbon number of 2 to 10 that optionally has a substituent, and $R^{11}$ and $R^{12}$ each independently represent an alkyl group having a carbon number of 1 to 6.

In the formula (A), Q is preferably a hydrogen atom or an alkyl group, an alkoxy group, or an alkenyl group having a carbon number of 1 to 6 or preferably a carbon number of 1 to 4. The alkyl group represented by Q or the alkyl group of the alkoxy group represented by Q may be linear or branched. Specific examples of the foregoing include a methyl group, an ethyl group, an n-propyl group, an i-propyl group, an n-butyl group, an i-butyl group, an s-butyl group, and a t-butyl group.

The alkenyl group represented by Q is preferably an alkenyl group having an ester group as a substituent, and the carbon number of the alkenyl group, including the carbon number of the substituent, is preferably 3 to 10, and more preferably 4 to 8. Among the foregoing, 2-(alkylidene)malonic acid esters in which Q itself is a malonic acid ester moiety of the formula (A) are preferable. Among the foregoing, those having the same malonic acid ester residues centered on the benzene ring of the formula (A), particularly those having the same foregoing residues at para positions, are preferable.

In the formula (A), $R^{11}$ and $R^{12}$ are each preferably an alkyl group having a carbon number of 1 to 4. The alkyl groups represented by $R^{11}$ and $R^{12}$ may each be linear or branched. Specific examples of the foregoing include a methyl group, an ethyl group, an n-propyl group, an i-propyl group, an n-butyl group, an i-butyl group, an s-butyl group, and a t-butyl group. $R^{11}$ and $R^{12}$ are each preferably a methyl group.

Examples of commercially available malonic acid ester ultraviolet light absorbers include "Hostavin B-CAP" (tetraethyl-2,2-(1,4-phenylenedimethylidyne)-bismalonate, molecular weight: 418, melting point: 137 to 139°C), manufactured by Clariant AG, represented by the following structural formula and "Hostavin PR-25" (p-methoxybenzylidene malonic acid dimethyl ester, molecular weight: 250, melting point: 55 to 59°C), manufactured by Clariant AG, represented by the following structural formula.

[Chem. 3]

**Hostavin B-CAP**

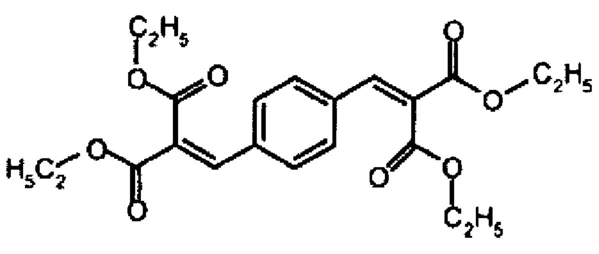

**Hostavin PR-25**

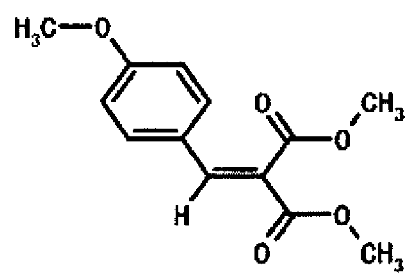

The malonic acid ester ultraviolet light absorber may be used in one kind alone or in a combination of two or more kinds.

<Oxalic Acid Anilide Ultraviolet Light Absorber>

As the oxalic acid anilide ultraviolet light absorber, any existing publicly known oxalic acid anilide compounds can be used. Specific examples thereof include 2-ethoxy-2'-ethyl oxalic acid bisanilide, 2-ethoxy-5-t-butyl-2'-ethyl oxalic acid bisanilide, and 2-ethoxy-3'-dodecyl oxalic acid bisanilide, and 2-ethoxy-2'-ethyl oxalic acid bisanilide is preferable.

Examples of commercially available oxalic acid anilide ultraviolet light absorbers include "Hostavin VSU" (2-ethoxy-2'-ethyl oxalic acid bisanilide, molecular weight: 312, melting point: 123 to 127°C), manufactured by Clariant AG,

represented by the following structural formula.

[Chem. 4]

Hostavin VSU

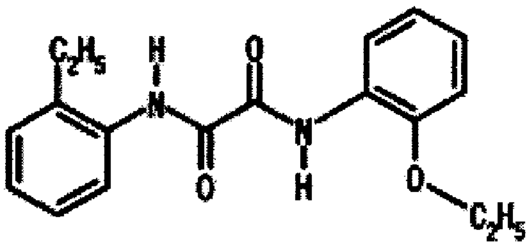

The oxalic acid anilide ultraviolet light absorber may be used in one kind alone or in a combination of two or more kinds.

One kind or two or more kinds of the malonic acid ester ultraviolet light absorber and one kind or two or more kinds of the oxalic acid anilide ultraviolet light absorber may be used in combination.

When the resin composition of the present invention contains the above-described ultraviolet light absorber (E), the content is preferably 0.001 to 1 part by mass, more preferably 0.005 to 0.8 parts by mass, and even more preferably 0.01 to 0.5 parts by mass with respect to 100 parts by mass of the polycarbonate resin (A). When the content of the ultraviolet light absorber (E) is in the foregoing range, the phosphorescent properties attributed to the phosphorescent material (B) are not deteriorated and weather resistance can be improved without causing the occurrence of, for example, bleedout, on the surface of the molded article.

[Phenolic Antioxidant (F)]

The resin composition of the present invention may further contain a phenolic antioxidant (F) as desired. By containing a phenolic antioxidant (F), hue degradation and mechanical property deterioration occurring during heat retention can be prevented or reduced.

Examples of the phenolic antioxidant (F) include hindered phenolic antioxidants. Specific examples thereof include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazine-2-ylamino)phenol.

Among these, pentaerythritol tetrakis[3-(3,5-di-tert-butyl-4-hydroxyphenyl)propionate] and octadecyl-3-(3,5-di-tert-butyl-4-hydroxyphenyl)propionate are preferable.

Examples of commercially available phenolic antioxidants include "Irganox 1010" and "Irganox 1076" manufactured by BASF SE and "ADEKA STAB AO-60" and "ADEKA STAB AO-50" manufactured by ADEKA Corporation.

The phenolic antioxidant (F) may be contained in one kind or in any combination of two or more kinds at any ratio.

When the resin composition of the present invention contains the phenolic antioxidant (F), the content is normally 0.02 to 3 parts by mass, particularly preferably 0.03 to 1 part by mass, and more particularly preferably 0.04 to 0.5 parts by mass with respect to 100 parts by mass of the polycarbonate resin (A). When the amount of the phenolic antioxidant (F) blended is at the foregoing lower limit value or more, the above-described effects attributed to the blending of the phenolic antioxidant (F) can be effectively obtained. An excessively large amount of the phenolic antioxidant (F) blended causes the effects to level off, which is uneconomic, and thus the foregoing upper limit or less is used.

[Other Blended Components]

The resin composition of the present invention may contain one kind or two or more kinds selected from various additives within the scope that does not impair the advantageous effects of the present invention. Examples of such additives include a colorant, a mold release agent, a flame retardant, and ultraviolet light absorbers other than the above-described malonic acid ester ultraviolet light absorber and oxalic acid anilide ultraviolet light absorber (which are hereinafter referred to as "other ultraviolet light absorbers").

The resin composition of the present invention may contain other resins than the polycarbonate resin (A).

<Colorant>

The resin composition of the present invention may contain various dyes and pigments as a colorant as desired. By containing dyes and pigments, not only the concealing properties and weather resistance of the resin composition of the present invention can be enhanced but also the design properties of the molded article to be obtained by molding the resin composition of the present invention can be enhanced.

Examples of the dyes and pigments include inorganic pigments, organic pigments, and organic dyes.

Examples of the inorganic pigments include carbon black; sulfide pigments such as cadmium red and cadmium yellow; silicate pigments such as ultramarine blue; oxide pigments such as titanium oxide, zinc white, iron oxide red, chromium oxide, iron black, titanium yellow, zinc-iron brown, titanium cobalt green, cobalt green, cobalt blue, copper-chromium black, and copper-iron black; chromate pigments such as chrome yellow and molybdate orange; and ferrocyanide pigments such as iron blue.

Examples of the organic pigments and the organic dyes include phthalocyanine dyes and pigments such as copper phthalocyanine blue and copper phthalocyanine green; azo dyes and pigments such as nickel azo yellow; condensed polycyclic dyes and pigments such as thioindigo, perinone, perylene, quinacridone, dioxazine, isoindolinone, and quinophthalone dyes and pigments; and anthraquinone, heterocyclic, and methyl dyes and pigments.

Among these, for example, titanium oxide, carbon black, and cyanine, quinoline, anthraquinone, and phthalocyanine compounds are preferable in view of heat stability.

The colorant may be contained in one kind or in any combination of two or more kinds at any ratio.

For the purpose of improving handling properties during extrusion and improving the dispersibility into the resin composition, a colorant masterbatched with the polycarbonate resin (A) or other resins may be used.

When the resin composition of the present invention contains such a colorant, the content is appropriately selected according to the necessary designability. The content of the colorant is normally 0.001 parts by mass or more, preferably 0.005 parts by mass or more, and more preferably 0.01 parts by mass or more, and is normally 3 parts by mass or less, preferably 2 parts by mass or less, more preferably 1 part by mass or less, and even more preferably 0.5 parts by mass or less with respect to 100 parts by mass of the polycarbonate resin (A). When the content of the colorant is at a lower limit value or more in the foregoing range, sufficient coloring effects can be obtained. When the content of the colorant is at an upper limit value or less in the foregoing range, mold contamination attributed to, for example, mold deposits, can be prevented.

<Flame Retardant>

The resin composition of the present invention may contain a flame retardant to obtain flame retardancy. The flame retardant is not particularly limited as long as it enhances the flame retardancy of the composition while retaining the transparency of the polycarbonate resin (A), but an organic sulfonic acid metal salt and a silicone compound are suitable.

Preferable examples of the organic sulfonic acid metal salt for the flame retardant include aliphatic sulfonic acid metal salts and aromatic sulfonic acid metal salts. These may be used in one kind alone or in a combination of two or more kinds. Preferable examples of the metal forming the organic sulfonic acid metal salt include alkali metals and alkaline earth metals. Examples of the alkali metals and the alkaline earth metals include sodium, lithium, potassium, rubidium, cesium, beryllium, magnesium, calcium, strontium, and barium.

Preferable examples of the aliphatic sulfonic acid salts include a fluoroalkane sulfonic acid metal salt, and more preferable examples include a perfluoroalkane sulfonic acid metal salt. Preferable examples of the fluoroalkane sulfonic acid metal salt include an alkali metal salt and an alkaline earth metal salt of fluoroalkane sulfonic acid, and more preferable examples include an alkali metal salt and an alkaline earth metal salt of fluoroalkane sulfonic acid having a carbon number of 4 to 8. Specific examples of the fluoroalkane sulfonic acid metal salt include sodium perfluorobutane sulfonate, potassium perfluorobutane sulfonate, sodium perfluoromethylbutane sulfonate, potassium perfluoromethylbutane sulfonate, sodium perfluorooctane sulfonate, and potassium perfluorooctane sulfonate.

Preferable examples of the aromatic sulfonic acid metal salts include an alkali metal salt and an alkaline earth metal salt of aromatic sulfonic acid. Specific examples of the aromatic sulfonic acid metal salts include 3,4-dichlorobenzenesulfonic acid sodium salt, 2,4,5-trichlorobenzenesulfonic acid sodium salt, benzenesulfonic acid sodium salt, a sodium salt of diphenyl sulfone-3-sulfonic acid, a potassium salt of diphenyl sulfone-3-sulfonic acid, a sodium salt of 4,4'-dibromo diphenyl sulfone-3-sulfonic acid, a potassium salt of 4,4'-dibromo phenyl sulfone-3-sulfonic acid, a calcium salt of 4-chloro-4'-nitrodiphenyl sulfone-3-sulfonic acid, a disodium salt of diphenyl sulfone-3,3'-disulfonic acid, and a dipotassium salt of diphenyl sulfone-3,3'-disulfonic acid.

When the resin composition of the present invention contains such an organic sulfonic acid metal salt, the content is preferably 0.01 to 3 parts by mass, more preferably 0.02 to 2 parts by mass, and even more preferably 0.03 to 1 part by mass with respect to 100 parts by mass of the polycarbonate resin (A). When the content of the organic sulfonic acid metal salt serving as the flame retardant is in the foregoing range, a resin composition having flame retardancy and good heat stability is realized. When the content of the organic sulfonic acid metal salt is at the foregoing upper limit or less, the transparency of the resin composition is not impaired. When the content of the organic sulfonic acid metal salt is at the foregoing lower limit or more, sufficient flame retardancy can be obtained.

As the silicone compound for the flame retardant, a polyorganosiloxane having a linear or branched structure disclosed in JP2006-169451A is preferable. The organic group of the polyorganosiloxane is selected from, for example, hydrocarbon groups such as alkyl groups and substituted alkyl groups, vinyl and alkenyl groups, cycloalkyl groups, and aromatic hydrocarbon groups such as phenyl and benzyl groups, the foregoing having a carbon number of 1 to 20.

The polyorganosiloxane may or may not contain a functional group. In the case of a polyorganosiloxane containing a functional group, the functional group is preferably a methacrylic group, an alkoxy group, or an epoxy group.

When the resin composition of the present invention contains such a silicone compound for the flame retardant, the content is preferably 0.5 to 10 parts by mass with respect to 100 parts by mass of the polycarbonate resin (A). When the content of the silicone compound serving as the flame retardant is in the foregoing range, good flame retardancy is obtained without impairing, for example, transparency, appearance, and elastic modulus.

The above-described organic sulfonic acid metal salt and silicone compound may be used in combination.

<Other Ultraviolet Light Absorbers>

The resin composition of the present invention may contain other ultraviolet light absorbers than the above-described malonic acid ester ultraviolet light absorber and oxalic acid anilide ultraviolet light absorber. Examples of such other ultraviolet light absorbers include benzophenone, benzotriazole, phenyl salicylate, and hindered amine ultraviolet light absorbers.

Specific examples of the benzophenone ultraviolet light absorbers include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone.

Specific examples of the benzotriazole ultraviolet light absorbers include 2-(2H-benzotriazol-2-yl)-p-cresol, 2-(2H-benzotriazol-2-yl)-4,6-bis(1-methyl-1-phenylmethyl)phenol, 2-[5-chloro(2H)-benzotriazol-2-yl]-4-methyl-6-(tert-butyl)phenol, 2,4-di-tert-butyl-6-(5-chlorobenzotriazol-2-yl)phenol, 2-(2H-benzotriazol-2-yl)-4-(1,1,3,3-tetrabutyl)phenol, and 2,2'-methylenebis[6-(2H-benzotriazol-2-yl)-4-(1,1,3,3-tetrabutyl)phenol].

Specific examples of the phenyl salicylate ultraviolet light absorbers include phenyl salicylate and 2,4-ditertiary-butylphenyl-3,5-di-tertiary-butyl-4-hydroxybenzoate.

Specific examples of the hindered amine ultraviolet light absorbers include bis(2,2,6,6-tetramethylpiperidin-4-yl) sebacate.

These may be used in one kind alone or in a combination of two or more kinds.

When the resin composition of the present invention contains such other ultraviolet light absorbers, for the same reason as in the case of the above-described ultraviolet absorber, the content, in total with the above-described malonic acid ester ultraviolet light absorber and oxalic acid ester ultraviolet light absorber, is preferably 0.001 to 1 part by mass, more preferably 0.005 to 0.8 parts by mass, and even more preferably 0.01 to 0.5 parts by mass with respect to 100 parts by mass of the polycarbonate resin (A) .

<Other Resin Components>

The resin composition of the present invention may contain resin components other than the polycarbonate resin (A). Examples of such other resin components include polystyrene resins, high-impact polystyrene resins, hydrogenated polystyrene resins, polyacrylic styrene resins, styrene-maleic anhydride copolymers, ABS resins, AS resins, AES resins, ASA resins, SMA resins, polyalkyl methacrylate resins, (meth)acrylate copolymers, polymethacryl methacrylate resins, polyphenyl ether resins, amorphous polyalkylene terephthalate resins, polyester resins, amorphous polyamide resins, poly-4-methylpentene-1, cyclic polyolefin resins, amorphous polyarylate resins, polyethersulfone, and thermoplastic elastomers such as styrene thermoplastic elastomers, olefinic thermoplastic elastomers, polyamide thermoplastic elastomers, polyester thermoplastic elastomers, and polyurethane thermoplastic elastomers. These may be used in one kind alone or in a mixture of two or more kinds.

When such other resin components are blended, the content is preferably 50 parts by mass or less with respect to 100 parts by mass of the polycarbonate resin (A) in view of making the polycarbonate resin (A) exhibit its original excellent properties and significantly obtaining the advantageous effects of the present invention attributed to the blending of the

phosphorescent material (B).

<Others>

As needed, in addition to the above-described components, for example, an antistatic agent, an antifog agent, a lubricant, an antiblocking agent, a fluidity improver, a plasticizer, a dispersant, and an antibacterial agent can be blended in the resin composition of the present invention within the scope that does not impair the objects of the present invention.
These may be used in one kind alone or in a combination of two or more kinds.

[Production Method]

The resin composition of the present invention can be produced, in accordance with an existing known method, by mixing and melt-kneading individual components. Specific examples of the mixing method include a method in which the polycarbonate resin (A), the phosphorescent material (B), and the phosphate stabilizer (C) and other additive components that are blended as needed are weighed in predetermined amounts and mixed with a mixer of various kinds such as a tumbler and a Henschel mixer and thereafter the mixture is melt-kneaded with, for example, a Banbury mixer, a roller, a Brabender, a single-screw kneading extruder, a double-screw kneading extruder, or a kneader.

[Molded Article]

A molded article of the present invention is formed by molding the resin composition of the present invention as described above.
As the molding method in the case of producing the molded article of the present invention formed by molding the resin composition of the present invention, it is possible to adopt, without limitation, an existing known method in which a molded article is molded from a thermoplastic resin. Specific examples of such a molding method include a common injection molding method, an ultrahigh-speed injection molding method, an injection compression molding method, a two-color molding method, a hollow molding method such as gas-assist molding, a molding method with the use of a heat insulating mold, a molding method with the use of a rapid heating mold, foam molding (including supercritical fluid molding), insert molding, an in-mold coating (IMC) molding method, an extrusion molding method, a sheet molding method, a heat molding method, a rotational molding method, a multilayer-molding method, and a press molding method.
According to the resin composition of the present invention, it is possible to realize a molded article providing bright reflected light and exhibiting high luminance such as that having an L* value of 65 or more, preferably 70 or more, and more preferably 75 or more, the L* value being measured in accordance with the method described in the section of Examples described below.

[Applications]

The molded article of the present invention formed by molding the resin composition of the present invention excels in designability and can be productized without being coated. The molded article of the present invention can be adopted to various applications such as electrical and electronic equipment, OA equipment, information terminal equipment, machinery components, home appliances, vehicle components, building members, various containers, play equipment, toys and leisure-time goods, sporting goods, cosmetics, accessories, and general goods such as stationery.

EXAMPLES

Hereinafter, the present invention will be more specifically described with reference to Examples.
The constituent components of the resin composition used in Examples, Reference Examples, and Comparative Examples described below are as follows.

<Polycarbonate Resin (A)>

S-3000F: an aromatic polycarbonate resin "Iupilon S-3000F" (viscosity-average molecular weight: 21,500) manufactured by Mitsubishi Engineering-Plastics Corporation

<Red Light-Emitting Phosphorescent Material (B1)>

R-300M: a red light-emitting phosphorescent material "LumiNova R-300M" (europium-magnesium-titanium-activated yttrium oxysulfide ($Y_2O_2S$:Eu,Mg,Ti), average particle diameter $D_{50}$: 15 μm) manufactured by Nemoto and Co.,

Ltd.

<Blue Light-Emitting Phosphorescent Material (B2)>

P-170: "KURAITO BRIGHT P-170" (dysprosium-europium-activated strontium magnesium silicate ($Sr_2MgSi_2O_7$:Eu,Dy), average particle diameter $D_{50}$: 25 μm) manufactured by RYOKO Co., Ltd.

<Green Light-Emitting Phosphorescent Material (B3)>

YG-025: "KURAITO BRIGHT YG-025" (dysprosium-europium-activated strontium aluminate (SrO·a$Al_2O_3$:Eu,Dy, 0.8 < a < 3, SrO·a$Al_2O_3$ > 99%, $Eu_2O_3$ < 1%, $Dy_2O_3$ < 1%), average particle diameter $D_{50}$: 25 μm) manufactured by RYOKO Co., Ltd.

<Phosphate Stabilizer (C)>

AX-71: "ADEKA STAB AX-71" (a mixture of monostearyl acid phosphate and distearyl acid phosphate, the mixture being represented by the above-described formula (II)) manufactured by ADEKA Corporation

<Mold Release Agent (D)>

VPG861: "Roxyol VPG861" (pentaerythritol tetrastearate) manufactured by Emery Oleochemicals Japan, Ltd.

<Ultraviolet Light Absorber (E)>

B-CAP: "Hostavin B-CAP" (tetraethyl-2,2-(1,4-phenylenedimethylidyne)-bismalonate) manufactured by Clariant AG

<Phenolic Antioxidant (F)>

AO-60: "ADEKA STAB AO-60" (pentaerythritol tetrakis[3-(3,5-di-tert-butyl-4-hydroxyphenyl)propionate]) manufactured by ADEKA Corporation

The various measurement and evaluation methods in Examples, Reference Examples, and Comparative Examples described below are as follows.

(1) MVR

Using the obtained pellets, the melt volume rate (MVR) was measured at a measurement temperature of 300°C and at a measurement load of 1.20 kgf in compliance with ISO1133. The MVR is preferably 8 to 25 $cm^3$/10 min.

(2) Initial Hue

The L*, b*, and YI (E313) of a 3 mm-thick portion of a specimen (in a form of a three-stage plate having a width of 50 mm, a length of 90 mm, and thicknesses of 1 mm, 2 mm, and 3 mm) obtained by injection molding was measured with a color-difference meter ("SE6000" manufactured by Nippon Denshoku Industries Co., Ltd.) under the following conditions based on JIS Z8722. The YI (E313) is a value measured in compliance with ASTM E313. A larger L* value indicates brighter reflected light and better luminance. The L* value is preferably 65 or more, more preferably 70 or more, and particularly preferably 75 or more. The b* is preferably 8 to 20, and the YI (E313) is preferably 45 or less, more preferably 40 or less, even more preferably 35 or less, and particularly more preferably 30 or less.

Reflection measurement: $D_{65}$ light source, 10-degree field of view
Measurement port: 30 ϕ
Specimen material holder: White

(3) Afterglow Luminance and Light-Emitting Color

After light blockage for 24 hours, the same 3 mm-thick portion of a specimen as used in the above-described initial hue measurement was irradiated with a $D_{65}$ light source for 20 minutes (200 Lx). The afterglow luminance statuses (the sensed light-emitting color and brightness) immediately after light blockage following this light irradiation and 30 minutes

and 60 minutes after light blockage following this light irradiation were examined by the visual observation of the appearance and evaluated in accordance with the following criteria. The light-emitting color refers to the afterglow color after light blockage following light irradiation.

<Evaluation Criteria>

A: High brightness is exhibited and the contour of the specimen can be clearly confirmed.
A to B: The results falling in the middle of the A rank and the B rank are indicated.
B: Regular brightness is exhibited and the contour of the specimen can be confirmed.
B to C: The results falling in the middle of the B rank and the C rank are indicated.
C: The contour of the specimen can be slightly confirmed, although it is blurred.
C to D: The results falling in the middle of the C rank and the D rank are indicated.
D: Little or no contour of the specimen can be confirmed.

[Examples and Comparative Examples Using Only Red Light-Emitting Phosphorescent Material (B1)]

[Examples I-1 to 3] (not according to the invention)

After the polycarbonate resin and the various additives were blended in the proportions presented in Table 1 and were mixed with a tumbler for 20 minutes, the mixture was kneaded with a vent-equipped single-screw extruder having a screw diameter of 50 mm ("VS50-34V" manufactured by Tanabe Plastics Machinery Co., Ltd.) at a cylinder temperature of 300°C and at a screw rotational speed of 80 rpm and the extruded strands were cut to thereby produce pellets.
After the obtained pellets were dried at 120°C for 5 hours, injection molding thereof was performed with an injection molding machine ("SE50DUZ" manufactured by Sumitomo Heavy Industries, Ltd.) under conditions of a cylinder temperature of 300°C, a mold temperature of 120°C, and a molding cycle of 45 seconds to thereby produce a specimen (in a form of a three-stage plate having a width of 50 mm, a length of 90 mm, and thicknesses of 1 mm, 2 mm, and 3 mm).
The evaluation as described in (1) to (3) above was performed on the obtained pellets or specimens and the results were presented in Table 1.

[Table 1]

| | | | Example I-1 | Example I-2 | Example I-3 |
|---|---|---|---|---|---|
| Blend constituting resin composition (Parts by mass) | Polycarbonate resin (A) | S-3000F | 100 | 100 | 100 |
| | Red light-emitting phosphorescent material (B1) | R-300M | 10 | 10 | 10 |
| | Phosphate stabilizer (C) | AX-71 | | 0.05 | 0.05 |
| | Mold release agent (D) | VPG861 | | 0.5 | 0.5 |
| | Ultraviolet light absorber (E) | B-CAP | | | 0.3 |
| | Phenolic antioxidant (F) | AO-60 | | | 0.1 |

(continued)

| | | | Example I-1 | Example I-2 | Example I-3 |
|---|---|---|---|---|---|
| Evaluation results | MVR | $cm^3/10$ min | 20.3 | 17.9 | 18.5 |
| | Initial hue | L* | 76.8 | 80.0 | 82.8 |
| | | b* | 16.1 | 12.6 | 12.2 |
| | | YI (E313) | 35.3 | 27.0 | 25.2 |
| | Afterglow luminance (Visual judgement) | Immediately after light blockage following 20-minute $D_{65}$ irradiation | A | A | A |
| | | 30 minutes after light blockage following 20-minute $D_{65}$ irradiation | C | B | B |
| | | 60 minutes after light blockage following 20-minute $D_{65}$ irradiation | D | C to D | C to D |
| | Light-emitting color | | Red | Red | Red |

[Comparative Examples I-1 to 3]

Except that no red light-emitting phosphorescent material (B1) was blended, the same blends as in Examples I-1 to 3 were respectively used to thereby produce pellets and specimens of the resin composition, and the evaluation of the afterglow luminance was performed in the same manner. The results all indicated that the luminance immediately after light blockage was "D".

[Comparative Examples I-4 to 6]

Except that the amount of the red light-emitting phosphorescent material (B1) blended was 0.5 parts by mass, the same blends as in Examples I-1 to 3 were respectively used to thereby produce pellets and specimens of the resin composition, and the evaluation of the afterglow luminance was performed in the same manner. The results all indicated that the luminance immediately after light blockage was "C".

The above-described results reveal that according to the present invention containing the red light-emitting phosphorescent material (B1) as the phosphorescent material (B), a red phosphorescent polycarbonate resin composition emitting light in red during light shielding is provided.

[Examples, Reference Examples, and Comparative Examples Using Two or More Kinds of Phosphorescent Material (B)]

[Examples II-1 to 13, Reference Examples II-1 to 3, and Comparative Example II-1]

After the polycarbonate resin and the various additives were blended in the proportions presented in Tables 2 and 3 and were mixed with a tumbler for 20 minutes, the mixture was kneaded with a vent-equipped single-screw extruder having a screw diameter of 50 mm ("VS50-34V" manufactured by Tanabe Plastics Machinery Co., Ltd.) at a cylinder temperature of 300°C and at a screw rotational speed of 80 rpm and the extruded strands were cut to thereby produce pellets.

After the obtained pellets were dried at 120°C for 5 hours, injection molding thereof was performed with an injection molding machine ("SE50DUZ" manufactured by Sumitomo Heavy Industries, Ltd.) under conditions of a cylinder temperature of 300°C, a mold temperature of 120°C, and a molding cycle of 45 seconds to thereby produce a specimen (in a form of a three-stage plate having a width of 50 mm, a length of 90 mm, and thicknesses of 1 mm, 2 mm, and 3 mm).

The evaluation as described in (1) to (3) above was performed on the obtained pellets or specimens and the results were presented in Tables 2 and 3.

[Table 2]

| | | | Example II-1 | Example II-2 | Example II-3 | Example II-4 | Example II-5 | Example II-6 |
|---|---|---|---|---|---|---|---|---|
| Blend constituting resin composition (Parts by mass) | Polycarbonate resin (A) | S-3000F | 100 | 100 | 100 | 100 | 100 | 100 |
| | Red light-emitting phosphorescent material (B1) | R-300M | 6 | 6 | 6 | 4.2 | 7.2 | 9 |
| | Blue light-emitting phosphorescent material (B2) | P-170 | 3 | 3 | 3 | 2.1 | 3.6 | 4.5 |
| | Green light-emitting phosphorescent material (B3) | YG-025 | 1 | 1 | 1 | 0.7 | 1.2 | 1.5 |
| | Phosphate stabilizer (C) | AX-71 | | 0.05 | 0.05 | 0.05 | 0.05 | 0.05 |
| | Mold release agent (D) | VPG861 | | 0.5 | 0.5 | 0.5 | 0.5 | 0.5 |
| | Ultraviolet light absorber (E) | B-CAP | | | 0.3 | | | |
| | Phenolic antioxidant (F) | AO-60 | | | 0.1 | | | |
| | Total amount of phosphorescent material (B) | | 10 | 10 | 10 | 7 | 12 | 15 |

(continued)

| | | | Example II-1 | Example II-2 | Example II-3 | Example II-4 | Example II-5 | Example II-6 |
|---|---|---|---|---|---|---|---|---|
| Evaluation results | MVR | $cm^3$/10 min | 21.2 | 17.8 | 18.4 | 17.0 | 19.0 | 20.5 |
| | Initial hue | L* | 75.6 | 80.9 | 81.6 | 75.2 | 82.6 | 83.5 |
| | | b* | 18.6 | 15.1 | 15.1 | 16.5 | 15.0 | 14.5 |
| | | YI (E313) | 39.5 | 29.5 | 29.2 | 32.5 | 29.0 | 28.5 |
| | Afterglow luminance (Visual judgement) | Immediately after light blockage following 20-minute $D_{65}$ irradiation | B | A | A | B to C | A | A |
| | | 30 minutes after light blockage following 20-minute $D_{65}$ irradiation | B | A to B | A to B | C | A to B | A |
| | | 60 minutes after light blockage following 20-minute $D_{65}$ irradiation | B | B | B | C to D | B | A |
| | Light-emitting color | | White | White | White | White | White | White |

[Table 3]

| | | | Example II-7 | Example II-8 | Example II-9 | Example II-10 | Example II-11 | Example II-12 | Example II-13 | Reference Example II-1 | Reference Example II-2 | Reference Example II-3 | Comparative Example II-1 |
|---|---|---|---|---|---|---|---|---|---|---|---|---|---|
| Blend constituting resin composition (Parts by mass) | Polycarbonate resin (A) | S-3000F | 100 | 100 | 100 | 100 | 100 | 100 | 100 | 100 | 100 | 100 | 100 |
| | Red light-emitting phosphorescent material (B1) | R-300M | 2.5 | 5 | 7.5 | 7.5 | 7.5 | 2.5 | 11.25 | | | | |
| | Blue light-emitting phosphorescent material (B2) | P-170 | 7.5 | 5 | 2.5 | 7.5 | | | | 7.5 | 5 | 2.5 | 25 |
| | Green light-emitting phosphorescent material (B3) | YG-025 | | | | | 2.5 | 7.5 | 3.75 | 2.5 | 5 | 7.5 | |
| | Phosphate stabilizer (C) | AX-71 | 0.05 | 0.05 | 0.05 | 0.05 | 0.05 | 0.05 | 0.05 | 0.05 | 0.05 | 0.05 | 0.05 |
| | Mold release agent (D) | VPG861 | 0.5 | 0.5 | 0.5 | 0.5 | 0.5 | 0.5 | 0.5 | 0.5 | 0.5 | 0.5 | 0.5 |
| | Ultraviolet light absorber (E) | B-CAP | | | | | | | | | | | |
| | Phenolic antioxidant (F) | AO-60 | | | | | | | | | | | |
| | Total amount of phosphorescent material (B) | | 10 | 10 | 10 | 15 | 10 | 10 | 15 | 10 | 10 | 10 | 25 |

(continued)

| | | | Example II-7 | Example II-8 | Example II-9 | Example II-10 | Example II-11 | Example II-12 | Example II-13 | Reference Example II-1 | Reference Example II-2 | Reference Example II-3 | Comparative Example II-1 |
|---|---|---|---|---|---|---|---|---|---|---|---|---|---|
| Evaluation results | MVR | $cm^3$/10 min | 17.5 | 18.0 | 17.9 | 21.0 | 17.7 | 17.9 | 21.5 | 18.2 | 17.6 | 17.8 | 16.5 |
| | Initial hue | L* | 78.1 | 80.5 | 82.0 | 82.5 | 81.3 | 75.2 | 83.3 | 68.4 | 68.1 | 66.5 | 60.5 |
| | | b* | 14.9 | 14.0 | 12.4 | 14.5 | 13.4 | 18.1 | 14.0 | 14.4 | 15.6 | 16.2 | 20.1 |
| | | YI (E313) | 28.6 | 27.3 | 24.9 | 28.2 | 26.0 | 33.5 | 25.8 | 29.5 | 31.3 | 32.9 | 40.2 |
| | Afterglow luminance (Visual judgement) | Immediately after light blockage following 20-minute $D_{65}$ irradiation | A | A | A | A | A | A | A | A | A | A | A |
| | | 30 minutes after light blockage following 20-minute $D_{65}$ irradiation | A to B | A to B | A to B | A | A to B | A to B | A | A to B | A to B | A to B | A |
| | | 60 minutes after light blockage following 20-minute $D_{65}$ irradiation | B | C | C | A | B | B | A | B | B | B | A |
| | Light-emitting color | | Blue | Purple | Red-purple | Purple | Yellow-red | Yellow-green | Yellow-red | Blue-green | Green | Green | Blue |

Tables 2 and 3 reveal the following.

Examples II-1 to 6 are examples where three kinds of the phosphorescent material (B) which are the red light-emitting phosphorescent material (B1), the blue light-emitting phosphorescent material (B2), and the green light-emitting phosphorescent material (B3) were blended and were caused to emit light in white. Among these, Examples 1 to 3 are examples where the presence or absence of the blending of the phosphate stabilizer (C), the mold release agent (D), the ultraviolet light absorber (E), and the phenolic antioxidant (F) was changed, and it is revealed that the blending of the phosphate stabilizer (C) and the mold release agent (D) enables the enhancement of the afterglow luminance.

Examples II-4 to 6 are examples where the amount of the red light-emitting phosphorescent material (B1), the blue light-emitting phosphorescent material (B2), and the green light-emitting phosphorescent material (B3) blended was changed relative to Example II-2. Example II-2 and Examples II-4 to 6 reveal that the larger the amount of the phosphorescent material (B) blended, the more greatly the afterglow luminance is enhanced. Example II-4 exhibits a short afterglow time due to the small amount of the phosphorescent material (B) blended compared with the other Examples, but the afterglow luminance can be confirmed 20 minutes after the irradiation.

Examples II-7 to 13 and Reference Examples II-1 to 3 are examples where two kinds of the phosphorescent material (B) were blended.

Examples II-7 to 9 reveal that by changing the blending proportions of the red light-emitting phosphorescent material (B1) and the blue light-emitting phosphorescent material (B2), the light-emitting color can be changed from blue, purple, to red-purple. Furthermore, Examples II-8 and II-10 reveal that even when two kinds of the phosphorescent material (B) were blended, the larger the amount of the phosphorescent material (B) blended, the more greatly the afterglow luminance is enhanced.

Likewise, Examples II-11 and II-12 reveal that by changing the blending proportions of the red light-emitting phosphorescent material (B1) and the green light-emitting phosphorescent material (B3), the light-emitting color can be changed. Examples II-11 and II-13 reveal that the larger the amount of the phosphorescent material (B) blended, the more greatly the afterglow luminance is enhanced.

Reference Examples II-1 to 3 are examples where the blue light-emitting phosphorescent material (B2) and the green light-emitting phosphorescent material (B3) were used in combination and no red light-emitting phosphorescent material (B1) was used. Reference Examples II-1 to 3 exhibit a slightly low L* value of the initial hue and slightly insufficient luminance compared with Examples II-7 to 13 where the blue light-emitting phosphorescent material (B2) or the green light-emitting phosphorescent material (B3) was used in combination with the red light-emitting phosphorescent material (B1).

Comparative Example II-1 is an example where only the blue light-emitting phosphorescent material (B2) is contained in a large amount and, although the afterglow in blue can be obtained, the L* value of the initial hue is low and no sufficient luminance is obtained. In Comparative Example II-1, due to the excessively large amount of the phosphorescent material (B), for example, moldability and heat stability and the mechanical strength of the molded article are impaired.

[Comparative Examples II-2 to 4]

Except that the amount of the red light-emitting phosphorescent material (B1) was 0.36 parts by mass, the amount of the blue light-emitting phosphorescent material (B2) was 0.18 parts by mass, and the amount of the green light-emitting phosphorescent material (B3) was 0.06 parts by mass (the total amount of the phosphorescent material (B) was 0.6 parts by mass), the same blends as in Examples II-1 to 3 were respectively used to thereby produce pellets and specimens of the resin composition, and the evaluation of the afterglow luminance was performed in the same manner. The results all indicated that the luminance immediately after light blockage was "C to D".

The above-described results reveal that according to the present invention where the blue light-emitting phosphorescent material (B2) and/or the blue light-emitting phosphorescent material (B2) is combined with the red light-emitting phosphorescent material (B1) as the phosphorescent material (B), a phosphorescent polycarbonate resin composition emitting, during light shielding, light in a light-emitting color that did not exist in the related art, such as white, is provided.

The present application is based on Japanese Patent Application No. 2019-078683 filed on April 17, 2019, Japanese Patent Application No. 2019-078684 filed on April 17, 2019, Japanese Patent Application No. 2020-016382 filed on February 3, 2020, and Japanese Patent Application No. 2020-047980 filed on March 18, 2020.

## Claims

**1.** A phosphorescent polycarbonate resin composition comprising:

100 parts by mass of a polycarbonate resin (A); and

3 to 20 parts by mass of a phosphorescent material (B),
wherein the phosphorescent material (B) includes a red light-emitting phosphorescent material (B1), and further contains a blue light-emitting phosphorescent material (B2) or a green light-emitting phosphorescent material (B3),
wherein an L* value measured in accordance with a following method (X) is 65 or more,
the method (X) including: under conditions of a cylinder temperature of 300°C, a mold temperature of 120°C, and a molding cycle of 45 seconds, measuring, with a color-difference meter, the L* of a 3 mm-thick portion of a specimen (in a form of a three-stage plate having a width of 50 mm, a length of 90 mm, and thicknesses of 1 mm, 2 mm, and 3 mm) obtained by injection molding of the phosphorescent polycarbonate resin composition, under following conditions based on JIS Z8722:

Reflection measurement: D65 light source, 10-degree field of view
Measurement port: 30 $\phi$
Specimen material holder: White

**2.** The phosphorescent polycarbonate resin composition according to Claim 1, wherein the phosphorescent material (B) contains the red light-emitting phosphorescent material (B1), the blue light-emitting phosphorescent material (B2), and the green light-emitting phosphorescent material (B3).

**3.** The phosphorescent polycarbonate resin composition according to Claim 1 or 2, wherein, in the phosphorescent material (B), a content of the red light-emitting phosphorescent material (B1) is 45% by mass or more with respect to an entire amount of the phosphorescent material (B).

**4.** The phosphorescent polycarbonate resin composition according to Claim 3, wherein, in the phosphorescent material (B), a content of the red light-emitting phosphorescent material (B1) is 45% by mass or more and 90% by mass or less with respect to an entire amount of the phosphorescent material (B).

**5.** The phosphorescent polycarbonate resin composition according to any one of Claims 1 to 4, wherein the red light-emitting phosphorescent material (B1) is europium-magnesium-titanium-activated yttrium oxysulfide ($Y_2O_2S$:Eu,Mg,Ti).

**6.** The phosphorescent polycarbonate resin composition according to any one of Claims 1 to 5, wherein the blue light-emitting phosphorescent material (B2) is dysprosium-europium-activated strontium magnesium silicate ($Sr_2MgSi_2O_7$: Eu, Dy) .

**7.** The phosphorescent polycarbonate resin composition according to any one of Claims 1 to 6, wherein the green light-emitting phosphorescent material (B3) is dysprosium-europium-activated strontium aluminate ($SrO{\cdot}aAl_2O_3$:Eu,Dy, $0.8 < a < 3$).

**8.** The phosphorescent polycarbonate resin composition according to any one of Claims 1 to 7, further comprising, with respect to 100 parts by mass of the polycarbonate resin (A): 0.01 to 1 part by mass of one kind or two or more kinds of a phosphate stabilizer (C) selected from alkyl acid phosphate, alkenyl acid phosphate, and metal salts of the foregoing.

**9.** The phosphorescent polycarbonate resin composition according to Claim 8, wherein the phosphate stabilizer (C) is represented by a following formula (I):

$$O=P(OH)_n(OR)_{3-n} \cdots \qquad (I)$$

wherein R is an alkyl group or an alkenyl group having a carbon number of 9 to 30, n is an integer of 1 or 2, and when n is 1, two Rs may be the same or different.

**10.** The phosphorescent polycarbonate resin composition according to Claim 9, wherein the R in the formula (I) is an alkyl group or an alkenyl group having a carbon number of 13, 18, or 24.

**11.** The phosphorescent polycarbonate resin composition according to Claim 10, wherein the phosphate stabilizer (C) is represented by a following formula (II) and is a mixture of distearyl acid phosphate corresponding to the formula (II) wherein n = 1 and monostearyl acid phosphate corresponding to the formula (II) wherein n = 2:

$$O{=}P\,(OH)_n(OC_{18}H_{37})_{3-n} \cdots \qquad (II)$$

**12.** A molded article formed by molding the phosphorescent polycarbonate resin composition according to any one of Claims 1 to 11.

**13.** The molded article according to Claim 12, wherein the phosphorescent material (B) contains the red light-emitting phosphorescent material (B1), the blue light-emitting phosphorescent material (B2), and the green light-emitting phosphorescent material (B3), and an afterglow color obtained, after light blockage following light irradiation performed on the molded article, is white, whereby the afterglow color is measured according to the method of the description.

**Patentansprüche**

**1.** Phosphoreszierende Polycarbonatharz-Zusammensetzung, umfassend:

100 Massenteile eines Polycarbonatharzes (A); und
3 bis 20 Massenteile eines phosphoreszierenden Materials (B),
wobei das phosphoreszierende Material (B) ein rotlichtemittierendes phosphoreszierendes Material (B1) umfasst und ferner ein blaulichtemittierendes phosphoreszierendes Material (B2) oder ein grünlichtemittierendes phosphoreszierendes Material (B3) enthält,
wobei ein gemäß dem folgenden Verfahren (X) gemessener L*-Wert 65 oder mehr beträgt,
wobei das Verfahren (X) umfasst: unter Bedingungen einer Zylindertemperatur von 300 °C, einer Formtemperatur von 120 °C und einem Formzyklus von 45 Sekunden wird mit einem Farbdifferenzmesser der L*-Wert eines 3 mm dicken Abschnitts einer Probe (in Form einer dreistufigen Platte mit einer Breite von 50 mm, einer Länge von 90 mm und einer Dicke von 1 mm, 2 mm und 3 mm), die durch Spritzgießen der phosphoreszierenden Polycarbonatharz-Zusammensetzung erhalten wurde, unter den folgenden Bedingungen gemäß JIS Z8722 gemessen:

Reflexionsmessung: D65-Lichtquelle, 10-Grad-Sichtfeld
Messöffnung: 30 $\phi$
Probenmaterialhalter: Weiß

**2.** Phosphoreszierende Polycarbonatharz-Zusammensetzung gemäß Anspruch 1, wobei das phosphoreszierende Material (B) das rotlichtemittierende phosphoreszierende Material (B1), das blaulichtemittierende phosphoreszierende Material (B2) und das grünlichtemittierende phosphoreszierende Material (B3) enthält.

**3.** Phosphoreszierende Polycarbonatharz-Zusammensetzung gemäß Anspruch 1 oder 2, wobei in dem phosphoreszierenden Material (B) der Gehalt des rotlichtemittierenden phosphoreszierenden Materials (B1) 45 Massenprozent oder mehr, bezogen auf die Gesamtmenge des phosphoreszierenden Materials (B), beträgt.

**4.** Phosphoreszierende Polycarbonatharz-Zusammensetzung gemäß Anspruch 3, wobei in dem phosphoreszierenden Material (B) der Gehalt des rotlichtemittierenden phosphoreszierenden Materials (B1) 45 Massenprozent oder mehr und
90 Massenprozent oder weniger, bezogen auf die Gesamtmenge des phosphoreszierenden Materials (B), beträgt.

**5.** Phosphoreszierende Polycarbonatharz-Zusammensetzung gemäß mindestens einem der Ansprüche 1 bis 4, wobei das rotlichtemittierende phosphoreszierende Material (B1) Europium-Magnesium-Titan-aktiviertes Yttriumoxysulfid ($Y_2O_2S$:Eu,Mg,Ti) ist.

**6.** Phosphoreszierende Polycarbonatharz-Zusammensetzung gemäß mindestens einem der Ansprüche 1 bis 5, wobei das blaulichtemittierende phosphoreszierende Material (B2) Dysprosium-Europium-aktiviertes Strontiummagnesiumsilikat ($Sr_2MgSi_2O_7$:Eu,Dy) ist.

**7.** Phosphoreszierende Polycarbonatharz-Zusammensetzung gemäß mindestens einem der Ansprüche 1 bis 6, wobei das grünlichtemittierende phosphoreszierende Material (B3) Dysprosium-Europium-aktiviertes Strontiumaluminat ($SrO\cdot aAl_2O_3$:Eu,Dy, $0{,}8 < a < 3$) ist.

**8.** Phosphoreszierende Polycarbonatharz-Zusammensetzung gemäß mindestens einem der Ansprüche 1 bis 7, ferner umfassend, bezogen auf 100 Massenteile des Polycarbonatharzes (A), 0,01 bis 1 Massenteil einer oder zwei oder mehr Arten eines Phosphatstabilisators (C), der ausgewählt ist aus Alkylsäurephosphat, Alkenylsäurephosphat und Metallsalzen der vorgenannten.

**9.** Phosphoreszierende Polycarbonatharz-Zusammensetzung gemäß Anspruch 8, wobei der Phosphatstabilisator (C) durch die folgende Formel (I) dargestellt wird:

$$O{=}P(OH)_n(OR)_{3\text{-}n} \cdots \qquad (I)$$

worin R eine Alkylgruppe oder eine Alkenylgruppe mit einer Kohlenstoffzahl von 9 bis 30 ist, n eine ganze Zahl von 1 oder 2 ist und wenn n 1 ist, zwei R gleich oder verschieden sein können.

**10.** Phosphoreszierende Polycarbonatharz-Zusammensetzung gemäß Anspruch 9, worin das R in der Formel (I) eine Alkylgruppe oder eine Alkenylgruppe mit einer Kohlenstoffzahl von 13, 18 oder 24 ist.

**11.** Phosphoreszierende Polycarbonatharz-Zusammensetzung gemäß Anspruch 10, wobei der Phosphatstabilisator (C) durch die folgende Formel (II) dargestellt wird und eine Mischung ist aus Distearylsäurephosphat entsprechend der Formel (II), worin n = 1 ist, und Monostearylsäurephosphat entsprechend der Formel (II), worin n = 2 ist:

$$O{=}P\ (OH)_n(OC_{18}H_{37})_{3\text{-}n} \cdots \qquad (II)$$

**12.** Formkörper, der durch Formen der phosphoreszierenden Polycarbonatharz-Zusammensetzung gemäß einem der Ansprüche 1 bis 11 hergestellt ist.

**13.** Formkörper gemäß Anspruch 12, wobei das phosphoreszierende Material (B) das rotlichtemittierende phosphoreszierende Material (B1), das blaulichtemittierende phosphoreszierende Material (B2) und das grünlichtemittierende phosphoreszierende Material (B3) enthält und eine Nachleuchtfarbe, die nach Lichtblockade im Anschluss an Lichtbestrahlung des Formkörpers erhalten wird, weiß ist, wobei die Nachleuchtfarbe gemäß dem Verfahren in der Beschreibung gemessen wird.

**Revendications**

**1.** Composition de résine de polycarbonate phosphorescente comprenant :

100 parties en masse d'une résine de polycarbonate (A) ; et
3 à 20 parties en masse d'une matière phosphorescente (B), la matière phosphorescente (B) incluant une matière phosphorescente émettant de la lumière rouge (B1), et contenant en outre une matière phosphorescente émettant de la lumière bleue (B2) ou une matière phosphorescente émettant de la lumière verte (B3),
dans laquelle une valeur L* mesurée conformément à une méthode (X) suivante est supérieure ou égale à 65, la méthode (X) incluant : dans les conditions d'une température de cylindre de 300°C, d'une température de moule de 120°C et d'un cycle de moulage de 45 secondes, mesurer, avec un spectrophotomètre, la valeur L* d'une portion de 3 mm d'épaisseur d'un échantillon (sous la forme d'une plaque à trois étages ayant une largeur de 50 mm,

une longueur de 90 mm et une épaisseur de 1 mm, 2 mm et 3 mm) obtenu par un moulage par injection de la composition de résine de polycarbonate phosphorescente, dans les conditions suivantes sur la base de la norme JIS Z8722 :

Mesure de réflexion : source lumineuse D65, champ de vision 10 degrés
Orifice de mesure : 30 $\phi$
Porte-échantillon : blanc.

**2.** Composition de résine de polycarbonate phosphorescente selon la revendication 1, dans laquelle la matière phosphorescente (B) contient la matière phosphorescente émettant de la lumière rouge (B1), la matière phosphorescente émettant de la lumière bleue (B2) et la matière phosphorescente émettant de la lumière verte (B3).

3. Composition de résine de polycarbonate phosphorescente selon la revendication 1 ou 2, dans laquelle, dans la matière phosphorescente (B), une teneur en matière phosphorescente émettant de la lumière rouge (B1) est supérieure ou égale à 45 % en masse par rapport à une quantité totale de matière phosphorescente (B).

4. Composition de résine de polycarbonate phosphorescente selon la revendication 3, dans laquelle, dans la matière phosphorescente (B), une teneur en matière phosphorescente émettant de la lumière rouge (B1) est supérieure ou égale à 45 % en masse et inférieure ou égale à 90 % en masse par rapport à une quantité totale de matière phosphorescente (B).

5. Composition de résine de polycarbonate phosphorescente selon l'une quelconque des revendications 1 à 4, dans laquelle la matière phosphorescente émettant de la lumière rouge (B1) est de l'oxysulfure d'yttrium activé par europium-magnésium-titane ($Y_2O_2S$ : Eu, Mg, Ti).

6. Composition de résine de polycarbonate phosphorescente selon l'une quelconque des revendications 1 à 5, dans laquelle la matière phosphorescente émettant de la lumière bleue (B2) est du silicate de strontium et de magnésium activé par dysprosium-europium ($Sr_2MgSi_2O_7$ : Eu, Dy).

7. Composition de résine de polycarbonate phosphorescente selon l'une quelconque des revendications 1 à 6, dans laquelle la matière phosphorescente émettant de la lumière verte (B3) est de l'aluminate de strontium activé par dysprosium-europium ($SrO \cdot aAl_2O_3$: Eu, Dy, $0,8 < a < 3$).

8. Composition de résine de polycarbonate phosphorescente selon l'une quelconque des revendications 1 à 7, comprenant en outre, par rapport à 100 parties en masse de la résine de polycarbonate (A) : 0,01 à 1 partie en masse d'un type ou deux types ou plusieurs types d'un stabilisant de phosphate (C) choisi parmi le phosphate d'acide alkyle, le phosphate d'acide alcényle et des sels métalliques de ceux-ci.

9. Composition de résine de polycarbonate phosphorescente selon la revendication 8, dans laquelle le stabilisant de phosphate (C) est représenté par une formule (I) suivante :

$$O{=}P\,(OH)_n(OR)_{3-n} \cdots \qquad (I)$$

où R est un groupe alkyle ou un groupe alcényle ayant un nombre de carbone de 9 à 30, n est un nombre entier de 1 ou 2 et, lorsque n est 1, deux Rs peuvent être identiques ou différents.

10. Composition de résine de polycarbonate phosphorescente selon la revendication 9, dans laquelle le R dans la formule (I) est un groupe alkyle ou un groupe alcényle ayant un nombre de carbone de 13, 18, ou 24.

11. Composition de résine de polycarbonate phosphorescente selon la revendication 10, dans laquelle le stabilisant de phosphate (C) est représenté par une formule (II) suivante et est un mélange de phosphate d'acide distéaryle correspondant à la formule (II) où n = 1 et de phosphate d'acide monostéaryle correspondant à la formule (II) où n = 2 :

$$O{=}P(OH)_n(OC_{18}H_{37})_{3-n} \cdots \qquad (II)$$

12. Article moulé formé par moulage de la composition de résine de polycarbonate phosphorescente selon l'une quelconque des revendications 1 à 11.

13. Article moulé selon la revendication 12, dans lequel la matière phosphorescente (B) contient la matière phosphorescente émettant de la lumière rouge (B1), la matière phosphorescente émettant de la lumière bleue (B2) et la matière phosphorescente émettant de la lumière verte (B3), et une couleur de rémanence obtenue, après blocage de la lumière suite à une irradiation lumineuse effectuée sur l'article moulé, est blanche, la couleur de rémanence étant mesurée conformément à la méthode de la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016028111 A
- JP 2006169451 A
- JP 2019078683 A
- JP 2019078684 A
- JP 2020016382 A
- JP 2020047980 A